# EUROPEAN PATENT APPLICATION

(11) **EP 2 615 844 A1**
(43) Date of publication of application: **17.07.2013**
(21) Application number: 10856885.8
(22) Date of filing: 08.11.2010
(51) Int. Cl.: H04N 21/418

(54) **WIRELESS DATA CARD AND METHOD FOR IMPLEMENTING TELEVISION PROGRAM DISPLAY BY SAID WIRELESS DATA CARD**

(30) Priority: 08.09.2010 CN 201010277523
(71) Applicant: ZTE Corporation, Shenzhen, Guangdong 518057 (CN)
(72) Inventor: LV, Yong, Shenzhen Guangdong 518057 (CN)
(74) Representative: Onsagers AS
(86) International application number: PCT/CN2010/078519
(87) International publication number: WO 2012/031423

(57) **Abstract**

The present invention provides a wireless data card and a method for implementing television program broadcast by a wireless data card. The wireless data card comprises: an information receiving and sending controller which is configured to receive and analyze a television broadcast signal to obtain program information, convert the program information into a program list in a form of an HTML page, and distribute the program list to a Web server; and is further configured to analyze the television broadcast signal to obtain audio and/or video data of a corresponding television program and forward the audio and/or video data to a stream media server according to a television program selection notification; a Web server which is configured to, when a computer coupled with the wireless data card accesses the Web server, send the program list in the form of the HTML page to a Web browser of the computer for a user to select a television program, and is further configured to receive a television program selection notification, which is sent by the computer according to a television program selected by the user, and forward the television program selection notification to the information receiving and sending controller; and a stream media server which is configured to encapsulate the audio and/or video data into an RTP/RTCP format and send the audio and/or video data that are encapsulated to the computer for broadcasting.

## Description

### Technical Field

The present invention relates to a digital television broadcast technology, and in particular to a wireless data card and a method for implementing television program broadcast by a wireless data card.

### Background

An existing wireless data card is widely applied, and is generally coupled with a computer via a Personal Computer Memory Card International Association (PCMCIA) interface, a Universal Serial Bus (USB) interface or a Peripheral Component Interconnection (PCI) interface. The wireless data card is classified as a network card and a television card. The network card has wireless communication functions, for example, a Wideband Code Division Multiple Access (WCDMA) standard, a Time Division Synchronous Code Division Multiple Access (TDSCDMA) standard, a Code Division Multiple Access (CDMA) standard or an Enhanced Data Rates for Global System for Mobile Communications (GSM) Evolution (EDGE) standard network card and the like can access a computer which is connected therewith into a wireless communication network. The television card can receive wireless broadcast signals, and can enable a computer connected therewith receive and broadcast television programs. In addition, some wireless data card has dual-functions of the network card and the television card, which can both access the wireless communication network and receive the wireless broadcast signals, and such wireless data card is commonly called as a television modem.

Television services deployed on the television card or the television modem usually aim at a digital television standard, such as China Mobile Multimedia Broadcasting (CMMB) in China, Digital Video Broadcasting (DVB)-H and DVB-T in Europe, Integrated Services Digital Broadcasting (ISDB)-T in Japan and the like. Television data in broadcast signals sent by such type of digital television services usually comprise two parts: audio and/or video data and program information (Electronic Program Guide (EPG) / Electronic Service Guide (ESG)). When broadcasting such type of digital television services, a common solution is as follows. The television card or television modem side firstly receives the broadcast signals, and then implements little processing, for example, encapsulating the television data in the broadcast signals into a format capable of being sent to the computer, or filtering out part of the data which the user does not consume, and then sends the processed data to the computer for processing. The computer side needs to develop a client. The client takes charge of analyzing the television data, displaying the program information thereof to the user, and broadcasting the audio and/or video data of the corresponding program via a stream media player according to the program selected by the user. In the above solution, as the client on the computer side takes charge of relatively complicated transaction, and operating systems on computers are quite different, the transplantation workload of the client is increased in order to support the different operating systems.

### Summary

For that reason, the present invention provides a wireless data card and a method for implementing television program broadcast by the wireless data card, which can reduce the transplantation workload of the client caused by different operating systems of computers.

The technical solution of the present invention is realized below.

A wireless data card comprises an information receiving and sending controller, a Web server and a stream media server; wherein
the information receiving and sending controller is configured to receive and analyze a television broadcast signal to obtain program information, convert the program information into a program list in a form of a Hypertext Markup Language (HTML) page and distribute the program list to the Web server; and is further configured to analyze the television broadcast signal to obtain audio and/or video data of a corresponding television program according to a television program selection notification sent by the Web server, and forward the audio and/or video data to the stream media server;
the Web server is configured to, when a computer coupled with the wireless data card accesses the Web server, send the program list in the form of the HTML page to a Web browser of the computer for a user to select a television program; and is further configured to receive the television program selection notification, which is sent by the computer according to the television program selected by the user, and forward the television program selection notification to the information receiving and sending controller; and
the stream media server is configured to encapsulate the audio and/or video data forwarded by the information receiving and sending controller into a Real-time Transport Protocol (RTP)/ Real-time Transport Control Protocol (RTCP) format, and send the audio and/or video data that are encapsulated to the computer for broadcasting.

Preferably, the wireless data card further comprises a data splitter, which is configured to, when a computer accesses the wireless data card, determine whether the computer accesses the Web server according to whether a destination Internet Protocol (IP) address accessed by the computer is a preset IP address.

Preferably, the HTML page further comprises a broadcast parameter and a transmission parameter of the audio and/or video data.

Preferably, the stream media server sends the audio and/or video data in a form of broadcasting or multicasting.

A method for implementing television program broadcast by a wireless data card comprises:
the wireless data card receiving and analyzing a television broadcast signal to obtain program information, and converting the program information into a program list in a form of a Hypertext Markup Language (HTML) page;
a computer which is coupled with the wireless data card accessing the wireless data card to obtain the program list in the form of the HTML page for a user to select a television program, and the computer sending a television program selection notification to the wireless data card according to the television program selected by the user;
according to the received television program selection notification, the wireless data card analyzing the television broadcast signal to obtain audio and/or video data of the corresponding television program, encapsulating the audio and/or video data into a Real-time Transport Protocol (RTP)/ Real-time Transport Control Protocol (RTCP) format, and sending the audio and/or video data that are encapsulated to the computer;
the computer receiving and broadcasting the audio and/or video data of the corresponding television program.

Preferably, the computer which is coupled with the wireless data card accessing the wireless data card to obtain the program list in the form of the HTML page comprises:
the wireless data card determining whether to send the program list in the form of the HTML page to the computer according to whether a destination Internet Protocol (IP) address provided when the computer accesses the wireless data card is a preset IP address.

Preferably, the HTML page further comprises a broadcast parameter and a transmission parameter of the audio and/or video data.

Preferably, the wireless data card sends the audio and/or video data in a form of broadcasting or multicasting.

From the above technical solution, it can be concluded that the wireless data card provided by the present invention converts the program information in the television broadcast signal into the HTML page for the Web browser on the computer to display, and encapsulates the audio and/or video data in the television broadcast signal into the RTP/RTCP format, sends the data to the computer so as the data can be played by the stream media player on the computer. The present invention makes full use of the existing Web page browsing function and the stream media play function of the computer, simplifies the development work of the client on the computer, and reduces the transplantation work of the client caused by the different operating systems of the computers. In addition, by adopting the technical solution of the present invention, the existing wireless data card not only has the wireless communication function, but also has a digital television service broadcasting function.

### Brief Description of the Drawings

Fig. 1 shows an internal structural diagram of a wireless data card in accordance with an embodiment of the present invention; and
Fig. 2 shows a flow diagram for implementing digital television program broadcast by the wireless data card in accordance with an embodiment of the present invention.

### Detailed Description of the Embodiments

The main principle of the embodiments of the present invention is described as follows. As an existing computer usually has a Web browser function, and the Web browser usually supports display of HTML pages of an embedded stream media player, the embodiments of the present invention convert, on a wireless data card side, television data into a format capable of being displayed by the Web browser and the stream media player of the computer, therefore, a user can watch a digital television program via the Web browser, the development work of a client on the computer can be simplified, and the transplantation work of the client caused by different operating systems of computers can be reduced.

The technical solution of the embodiments of the present invention is described in details below with reference to the drawings.

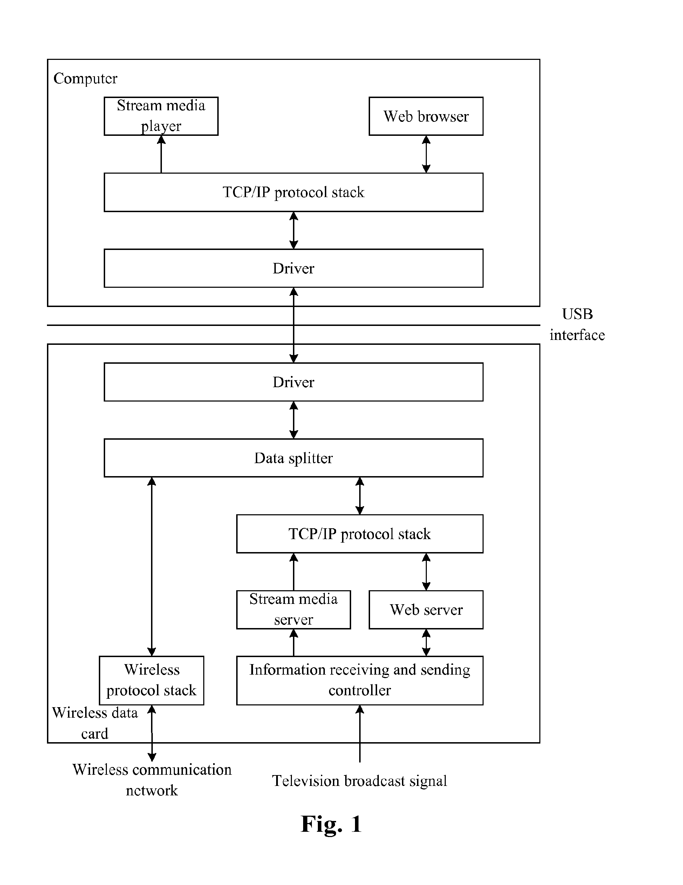

As shown in Fig. 1, a wireless data card of an embodiment of the present invention mainly comprises: an information receiving and sending controller, a Web server and a stream media server; wherein
the information receiving and sending controller is configured to receive and analyze a television broadcast signal to obtain program information (EPG/ESG), convert the program information into a program list in a form of a HTML page and distribute the program list to the Web server; and is further configured to analyze the television broadcast signal to obtain audio and/or video data of a corresponding television program and forward the audio and/or video data to the stream media server according to a television program selection notification sent by the Web server;
the Web server, also named as a directory server, is configured to, when a computer coupled with the wireless data card accesses the Web server via a preset IP address and port number, send the program list in the form of the HTML page to a Web browser of the computer for a user to select a television program, and is further configured to receive the television program selection notification, which is sent by the computer according to the television program selected by the user, and forward the television program selection notification to the information receiving and sending controller;
the stream media server is configured to encapsulate the audio and/or video data sent from the information receiving and sending controller into an RTP/ RTCP format and send the audio and/or video data that are encapsulated to the computer for broadcasting.

The wireless data card also comprises a data splitter, which is configured to, when the computer accesses the wireless data card, determine whether the computer accesses the Web server according to whether a destination IP address accessed by the computer is the preset IP address.

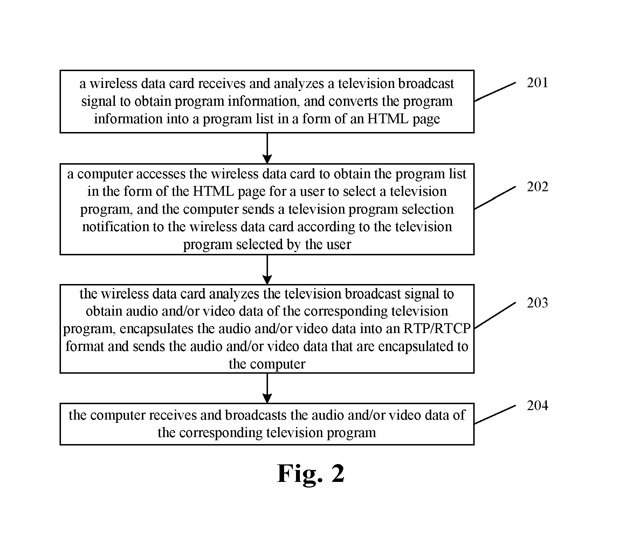

As shown in Fig. 2, the method for implementing digital television service broadcast by a wireless data card of the embodiment of the present invention comprises the following steps.

Step 201, the wireless data card receives and analyzes a television broadcast signal to obtain program information, and converts the program information into a program list in a form of an HTML page.

The HTML page further comprises a broadcast parameter and a transmission parameter of the audio and/or video data.

Step 202, the computer which is coupled with the wireless data card accesses the wireless data card to obtain the program list in the form of the HTML page for a user to select a television program, and the computer sends a television program selection notification to the wireless data card according to the television program selected by the user.

The computer which is coupled with the wireless data card accessing the wireless data card to obtain the program list in the form of the HTML page comprises:
the wireless data card determines whether to send the program list in the form of the HTML page to the computer according to whether a destination IP address provided when the computer accesses the wireless data card is a preset IP address.

Step 203, according to the received television program selection notification, the wireless data card analyzes the television broadcast signal to obtain audio and/or video data of the corresponding television program, encapsulates the audio and/or video data into an RTP/RTCP format and send the audio and/or video data which are encapsulated to the computer.

The audio and/or video data are sent in a form of broadcasting or multicasting to facilitate control.

Step 204, the computer receives and broadcasts the audio and/or video data of the corresponding television program.

The technical solution is further described in details below with reference to one specific embodiment.

A method for implementing CMMB television service broadcast by a wireless data card of the embodiments of the present invention comprises the following steps.

Step 301, the information receiving and sending controller receives and analyzes a CMMB signal to obtain program information (EPG/ESG), arranges the program information into a program list, and distributes the program list to the Web server in a form of an HTML page.

The HTML page of the program list further comprises a broadcast parameter and a transmission parameter of audio and/or video data of channels, so that the computer obtains the transmission parameter and the broadcast parameter by accessing the HTML page, and correctly receives and broadcasts the audio and/or video data according to the transmission parameter and the broadcast parameter.

In the above, the broadcast parameter of the audio and/or video data is carried by the audio and/or video data themselves, and comprises an audio format, a video format, an audio/video sampling rate, timestamp information and the like. The transmission parameter of the audio and/or video data is configured by the information receiving and sending controller, as the audio and/or video data are usually encapsulated into the RTP/RTCP format to be transmitted via IP, the transmission parameter comprises IP, User Datagram Protocol (UDP), RTP, RTCP and the like. The broadcast parameter is usually described in a mode of a Session Description Protocol (SDP) file.

Step 302, a computer which is coupled with the wireless data card accesses the Web server which is embedded in the wireless data card via a preset IP address and a port number to obtain the program list in the form of the HTML page, and displays the program list on a Web browser of the computer for a user to select a television program.

In the above, the computer and the wireless data card can be coupled with each other via a USB interface.

The Web browser of the computer sends an IP message of which a destination address is X and a destination port number is Y when accessing the Web server, the IP message sequentially passes a Transmission Control Protocol (TCP) / IP protocol stack and a driver on the computer side, and a driver on the wireless data card side, and finally reaches a data splitter in the wireless data card. The data splitter judges whether the destination IP address of the received IP message is the preset IP address, if not, sends the IP message to a wireless protocol stack in the wireless data card, and then sends the IP message to an external wireless communication network by the wireless protocol stack; otherwise, sends the IP message to the TCP/IP protocol stack on the wireless data card side, and then sends the IP message to the Web server by the TCP/IP protocol stack on the wireless data card side.

After receiving the IP message, the Web server encapsulates the program list in the form of the HTML page into an IP message and sends the IP message to the computer via the following path: Web server → TCP/IP protocol stack on the wireless data card side → data splitter → driver on the wireless data card side → driver on the computer side → TCP/IP protocol stack on the computer side → Web browser. In the process, when the IP message containing the program list reaches the data splitter and the data splitter finds that the destination address and the port number of the IP message are the preset destination address and the preset port number respectively, the IP message is sent to the computer.

Via the above description, it can be concluded that the Web browser on the computer can access and display contents on the Web server via a two-way channel, namely, Web browser ↔ TCP/IP protocol stack on the computer side ↔ driver on the computer side ↔ data splitter ↔ driver on the wireless data card side ↔ TCP/IP protocol stack on the wireless data card side ↔ Web server.

Step 303, the user clicks China Central Television (CCTV)1 on the HTML page and selects "play", correspondingly, the computer sends a television program selection notification to the Web server via the channel described in the Step 302.

Step 304, according to the received television program selection notification, if CCTV1 is not broadcasted, the Web server notifies the information receiving and sending controller to analyze the CMMB signal to obtain audio and/or video data of CCTV1, and forwards the audio and/or video data to the stream media server.

In addition, if the CCTV1 is being broadcasted, the current processing flow is ended. It can be acquired whether the CCTV1 is being broadcasted by comparing a currently received television program selection notification with the television program selection notification which is received in the last time via the Web server.

Step 305, the stream media server encapsulates the received audio and/or video data of the CCTV1 into the RTP/RTCP format, and then sends the audio and/or video data that are encapsulated to the computer.

In the step, the stream media server sends the audio and/or video data of the CCTV1 to the computer in a mode of broadcasting or multicasting according to the transmission parameter described in the SDP file, and the path of sending the audio and/or video data of the CCTV1 is: stream media server → TCP/IP protocol stack on the wireless data card side → data splitter → driver on the wireless data card side → driver on the computer side → TCP/IP protocol stack on the computer side → stream media player.

Step 306, the stream media player which is embedded in the Web browser of the computer receives the audio and/or video data of the CCTV1 according to the transmission parameter which is obtained from the HTML page, and broadcasts the audio and/or video data of the CCTV1 according to the broadcast parameter obtained from the HTML page.

In a conclusion, the embodiments of the present invention have the following two advantages: first, as technologies supported by all existing computers are maximally applied, the computers need not to be greatly modified, which results in a low cost; second, because of the HTML mode, a User Interface (UI) program can be simply and rapidly developed and customized.

The above is only the preferred embodiments of the present invention and not intended to limit the scope of protection of the present invention.

## Claims

1. A wireless data card, **characterized by** comprising an information receiving and sending controller, a Web server and a stream media server; wherein
the information receiving and sending controller is configured to receive and analyze a television broadcast signal to obtain program information, convert the program information into a program list in a form of a Hypertext Markup Language (HTML) page and distribute the program list to the Web server; and is further configured to analyze the television broadcast signal to obtain audio and/or video data of a corresponding television program according to a television program selection notification sent by the Web server, and forward the audio and/or video data to the stream media server;
the Web server is configured to, when a computer coupled with the wireless data card accesses the Web server, send the program list in the form of the HTML page to a Web browser of the computer for a user to select a television program; and is further configured to receive the television program selection notification, which is sent by the computer according to the television program selected by the user, and forward the television program selection notification to the information receiving and sending controller; and
the stream media server is configured to encapsulate the audio and/or video data forwarded by the information receiving and sending controller into a Real-time Transport Protocol (RTP)/ Real-time Transport Control Protocol (RTCP) format, and send the audio and/or video data that are encapsulated to the computer for broadcasting.

2. The wireless data card according to claim 1, **characterized in that** the wireless data card further comprises a data splitter, which is configured to, when a computer accesses the wireless data card, determine whether the computer accesses the Web server according to whether a destination Internet Protocol (IP) address accessed by the computer is a preset IP address.

3. The wireless data card according to claim 1 or 2, **characterized in that** the HTML page further comprises a broadcast parameter and a transmission parameter of the audio and/or video data.

4. The wireless data card according to claim 1 or 2, **characterized in that** the stream media server sends the audio and/or video data in a form of broadcasting or multicasting.

5. A method for implementing television program broadcast by a wireless data card, **characterized in that** the method comprises:
the wireless data card receiving and analyzing a television broadcast signal to obtain program information, and converting the program information into a program list in a form of a Hypertext Markup Language (HTML) page;
a computer which is coupled with the wireless data card accessing the wireless data card to obtain the program list in the form of the HTML page for a user to select a television program, and the computer sending a television program selection notification to the wireless data card according to the television program selected by the user;
according to the received television program selection notification, the wireless data card analyzing the television broadcast signal to obtain audio and/or video data of the corresponding television program, encapsulating the audio and/or video data into a Real-time Transport Protocol (RTP)/ Real-time Transport Control Protocol (RTCP) format, and sending the audio and/or video data that are encapsulated to the computer;
the computer receiving and broadcasting the audio and/or video data of the corresponding television program.

6. The method for implementing television program broadcast by the wireless data card according to claim 5, **characterized in that** the computer which is coupled with the wireless data card accessing the wireless data card to obtain the program list in the form of the HTML page comprises:
the wireless data card determining whether to send the program list in the form of the HTML page to the computer according to whether a destination Internet Protocol (IP) address provided when the computer accesses the wireless data card is a preset IP address.

7. The method for implementing television program broadcast by the wireless data card according to claim 5 or 6, **characterized in that** the HTML page further comprises a broadcast parameter and a transmission parameter of the audio and/or video data.

8. The method for implementing television program broadcast by the wireless data card according to claim 5 or 6, **characterized in that** the wireless data card sends the audio and/or video data in a form of broadcasting or multicasting.
